# EUROPEAN PATENT SPECIFICATION

(11) **EP 3 414 634 B1**
(45) Date of publication and mention of the grant of the patent: **22.12.2021**
(21) Application number: 17708906.7
(22) Date of filing: 06.02.2017
(51) Int. Cl.: G05B 15/02

(54) **ENERGY USAGE SUB-METERING SYSTEM UTILIZING INFRARED THERMOGRAPHY**
UNTERMESSSYSTEM FÜR ENERGIEVERBRAUCH MITTELS INFRAROTTHERMOGRAFIE
SYSTÈME DE SOUS-COMPTAGE DE CONSOMMATION D'ÉNERGIE UTILISANT LA THERMOGRAPHIE À INFRAROUGE

(30) Priority: 10.02.2016 US 201662293537 P
(43) Date of publication of application: 19.12.2018
(73) Proprietor: Carrier Corporation, Farmington, CT 06032 (US)
(72) Inventor: MANTESE, Joseph V., East Hartford, Connecticut 06108 (US); RADCLIFF, Thomas D., East Hartford, Connecticut 06108 (US); LENTS, Charles E., East Hartford, Connecticut 06108 (US)
(74) Representative: Schmitt-Nilson Schraud Waibel Wohlfrom Patentanwälte Partnerschaft mbB
(86) International application number: PCT/US2017/016648
(87) International publication number: WO 2017/139214

(56) References cited:
- WO-A1-2016/007735
- WO-A2-2012/170953
- US-A- 5 541 654
- US-A1- 2003 096 572
- US-A1- 2013 226 359
- US-A1- 2014 214 215
- US-A1- 2015 028 114
- US-B1- 6 740 879

## Description

### BACKGROUND

The present disclosure relates to an energy usage sub-metering system, and more particularly, to an energy usage sub-metering system utilizing infrared thermography.

The ability to assess energy utilization on a zonal basis (i.e., sub-metering) throughout, for example, a building system is attractive to a building owner because it enables the owner to apportion HVAC heating and/or cooling loads on a per utilized joule basis rather than proportional to the tenant's occupied floor space. High HVAC loadings arise in situations where personnel occupancy is high or when heat dissipation due to office equipment (e.g., computers, servers, space heaters, etc.) becomes excessive. In such cases, tenants that are assessed HVAC utilization based upon square footage are effectively subsidized by other tenants with lower HVAC loading. Thus it would be desirable to an owner of a building to know which tenants are most heavily loading their systems and thereby charge a premium for higher than average use.

Unfortunately, traditional energy utilization sub-metering is generally cost prohibitive since it would require instrumentation of all potential sources of, for example, heat generation (including people and office equipment) with both temperature and air flow measurement devices to assess caloric flux into the occupied area or zone. In addition, it may be necessary to measure air mass flow and temperature both into and out of an occupied zone.

US 2015/028114 A1 discloses a method and/or thermostat apparatus incorporating an infrared sensor or infrared imaging device and utilizing one or more images or measurements of infrared energy from the infrared sensor or imaging device in determining control of a Heating Ventilation and/or Air Conditioning (HVAC) system serving a conditioned space. The invention further optionally includes pattern recognition for locating one or more people within the conditioned space and utilizing a measurement of infrared energy radiated by the one or more people in determining control of the HVAC.

US 2003/096572 A1 discloses space-conditioning control employing image-based detection of occupancy and use. Cameras and image processing techniques are applied to the control of HVAC systems. Occupancy is detected using head-counting or motion detection. Activities are recognized in images and image sequences by machine-recognition techniques. The nature of activities, the intensity of activities, the number of occupants and their activities, etc. are all inferred from images and image sequences and used to predict current loads and/or required control signals for regulating an HVAC system.

WO 2016/007735 A1 discloses temperature-based estimation of building occupancy states. Building sensor data associated with individual rooms in a building can be decomposed using wavelets to identify features that correspond to heat loads generated by occupant presence and/or equipment operation. From this information, the occupancy state of individual rooms can be estimated. The estimated occupancy state for the individual rooms in the building then can be used to generate a usage profile for the building. The usage profile can be used to estimate current and/or future energy usage or costs or to control equipment in the building at a current and/or future time.

The present invention relates to an energy usage sub-metering system, a method of operating the same, and a building management system according to the appended claims.

### SUMMARY

An energy usage sub-metering system according to one embodiment is set out in appended claim 1.

In an aspect of the foregoing embodiment, the plurality of radiant energy sensors comprise a plurality of infrared sensors.

A building management system according to another embodiment is set out in appended claim 3.

A method of operating an energy usage sub-metering system according to another embodiment is set out in appended claim

In an aspect of the foregoing embodiment, the plurality of factors include first and second supply air temperatures for the respective first and second spaces.

In an aspect of the foregoing embodiment, the plurality of factors include calculating radiative heat using the Stephan-Boltzmann Law for heat flux.

In an aspect of the foregoing embodiment, the plurality of factors include convective heat transfer from the objects to surrounding air.

In an aspect of the foregoing embodiment, the plurality of factors include a rise in ambient temperature as determined from IR thermography of the surface areas.

In an aspect of the foregoing embodiment, the plurality of factors include look-up tables for heat dissipation based upon image analytics that identify the objects.

In an aspect of the foregoing embodiment, a HVAC system expends the total energy.

In an aspect of the foregoing embodiment, the objects include humans.

In an aspect of the foregoing embodiment, the objects include computers.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic of a building management system of the present disclosure;
FIG. 2 is a schematic of an ambient air temperature control system, coupled with an energy usage sub-metering system of the building management system;
FIG. 3 is a schematic of the energy usage sub-metering system;
FIG. 4 is a plan view of a focal plan array of a remote unit of the energy usage sub-metering system;
FIG. 5 is a perspective view of components of the remote unit of the energy usage sub-metering system 5 integrated into a common substrate platform; and
FIG. 6 is a flow chart of a method of operating the building management system.

### DETAILED DESCRIPTION

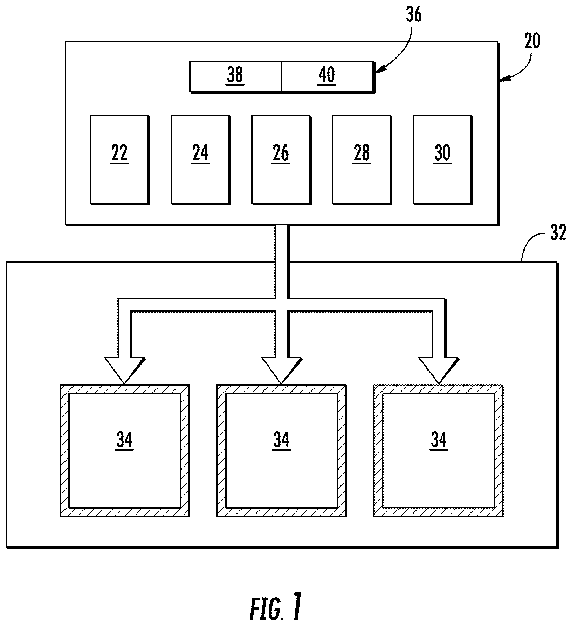

Referring to FIG. 1, a building management system 20 of the present disclosure is illustrated. The building management system 20 may include at least one of an ambient air temperature control system 22, a security system 24, a lighting or illumination system 26, a transportation system 28 a safety system 30 and others. Each system 22, 24, 26, 28, 30 may be associated with and/or contained within a building 32 having a plurality of predefined spaces 34 that may generally be detached or substantially isolated from one-another, may be accessible and/or interconnected via a door and/or through hallways (not shown) and other means.

The ambient air temperature control system 22 may be a forced air system such as a heating, ventilation, and air conditioning (HVAC) system, a radiant heat system and others. The security system 24 may be configured to detect intruders and provide various forms of alerts and notifications. The lighting system 26 may control and/or monitor lighting in each one of the predefined spaces 34 based on any number of factors including natural background lighting, occupancy and others. The transportation system 28 may include the control and/or monitoring of elevators, escalators and other transportation devices associated with and/or within the building 32. The safety system 30 may include the detection of conditions that may pose a risk or health hazard to occupants of the building 32. All of these systems 22, 24, 26, 28, 30 may require a variety of devices to perform any variety of functions including detection, monitoring communication, data referencing and collection, user control and others. Many devices may be shared between systems.

The building management system 20 may further include a computing device 36 that controls and/or supports each system 22, 24, 26, 28, 30. The computing device 36 may include a processor 38 (e.g., microprocessor) and a computer readable storage medium 40. It is further contemplated and understood that the building management system 20 may include more than one computing device 36 with any one computing device being dedicated to any one of the systems 22, 24, 26, 28, 30.

In one embodiment, the building management system 20 may include a forced air HVAC system 22 that includes a common supply duct plenum 42 that flows heated or cooled air into a plurality of ducts 44 routed to respective spaces 34 of the building 32. A temperature thermostat 46 may be located in each space 34 for controlling and monitoring ambient air temperature. In operation, the thermostat 46 may send a signal over pathway 48 to the computing device 36 when a demand for heating and/or cooling is needed. In-turn, the computing device 36 may initiate the HVAC system 22 that may include the control and/or energization of a damper 48 located in each duct 44. The control and/or energization of the dampers 48 is conducted over pathways 50, and enables the controlled flow of heated or cooled air (see arrows 52) from the supply plenum 42 and into the respective spaces 34. The energy expended to heat and/or cool air that is then supplied to all of the predefined spaces 34 as part of the HVAC system 22 may be supplied and measured through a metering system 54 that may generally be controlled by, for example, a public utility company for invoicing. In the configuration of the present example, the public utility metering system 54 may not be configured to determine the amount of energy expended in each individual space 34. The total energy expended, however, may be received and stored by the computing device 36. The energy, itself, may be in the form of natural gas (e.g., for heating air via a furnace application) and/or may be electrical power (e.g., for cooling air via an air conditioning unit). It is further contemplated and understood that many other forms and configuration of an ambient air temperature control system 22 may apply where the total energy expended and relative costs is determined through a central metering system, but may not be directly known on a per space basis. Pathways 48, 50 may be wired or wireless pathways.

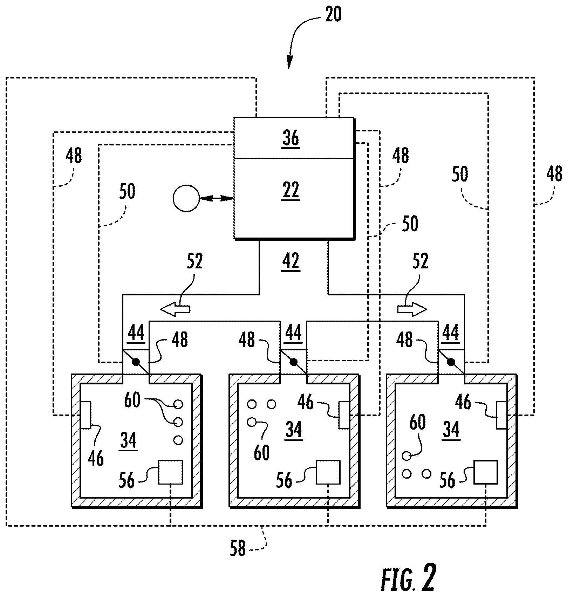

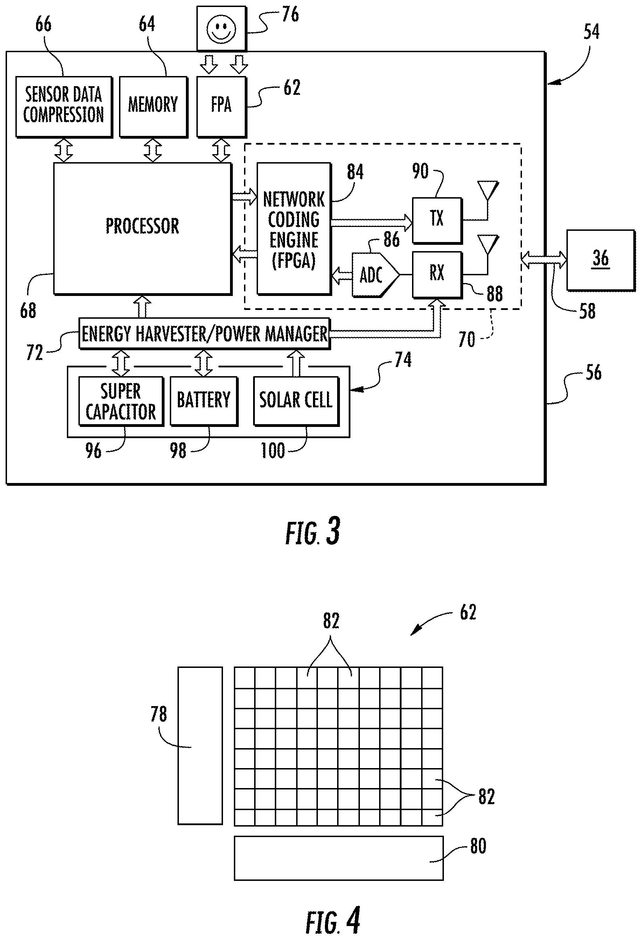

Referring to FIGS. 2 and 3, the building management system 20 includes an energy usage sub-metering system 54 that may be constructed and arranged to profile temperature throughout each space 34 in concert with heat generation and dissipation algorithms to provide data-based estimates of occupant HVAC loads in each space as well as joule release by various systems in the area 34, including: laptops, servers, copiers, desktop computers, and appliances. The HVAC load estimates may be used to proportion the actual total energy expended between spaces 34, and thereby enable the building management system 20 to proportionally charge each occupant of each space 34 for the energy expended. Such proportions may be executed by the computing device 36 and expressed as a ratio of the total energy usage and/or financial charges.

The algorithms may include an identification subroutine together with a look-up table to identify the subsystem through its thermal profile, to assist in the estimation of the local energy generation.

The energy usage sub-metering system 54 may include a local unit 56 located in each space 34 that may be configured to communicate with the computing device 36 over wired or wireless pathways (see arrow 58). The local unit 56 is configured to monitor a prescribed scene in each space 34 (e.g., the entire space) for thermally profiling objects 60 in each space 34. The objects 60 may include anything that emits heat such as computers, servers, humans, portable electric heaters, windows (i.e., in summer months), motor driven systems, vending with cooling and dispensing, and others. Similarly, the objects 60 may include heat sinks such as windows (i.e., in winter months). The local unit 56 may include a focal plane array (FPA) 62, a memory module 64, a sensor data compression block 66, a processor 68, a communication module 70, a power management module 72, and a power source 74.

Referring to FIGS. 3 and 4, the FPA 62 may be an infrared focal plane array configured to sense and detect heat emitted by the objects (e.g., humans, computers, servers, and others) in a scene 76. More particularly, the FPA 62 may be calibrated to provide the ability to do thermography (absolute local temperature measurements); either relative or absolute. The FPA 62 includes a row decoder 78, a column decoder 80, which are part of the Read-Out Integrated Circuit (ROIC), and a plurality of sensors 82 that may be infrared sensors arranged in a series of rows and columns (i.e., six rows and nine columns illustrated in FIG. 2). The row and column decoders 78, 80 are electrically coupled to the respective rows and columns of sensors 82, and are configured to receive intensity information (e.g., heat intensity) recorded over a time interval. As one example, the sensors 82 may be configured to sense radiated energy having an infrared, long, wavelength that may be within a range of about three (3) to fifteen (15) micrometers. This range is a thermal imaging region, in which the sensors 82 may obtain a passive image of the objects 60 only slightly higher than, for example, room temperature. This image may be based on thermal emissions only and requires no visible illumination.

The memory module 64 is generally a computer readable and writable storage medium and is configured to communicate with the processor 68 and generally stores intensity data from the sensors 82 for later processing, stores executable programs and their associated permanent data as well as intermediate data from their computation. The memory module 64 may be a random-access memory (RAM) that may be a ferroelectric RAM (FRAM) having relatively low power consumption with relatively fast write performance, and a high number of write-erase cycles.

The radiant energy intensity information received by the decoders 78, 80 may be conditioned via a signal conditioning circuit (not shown) and then sent to the processor 68. The signal conditioning circuit may be part of the ROIC. Signal conditioning may include analog-to-digital converters and other circuitry to compensate for noise that may be introduced by the sensors 82. The processor 68 may be configured to provide focal plane scaling of the intensity value data received from the signal condition circuit and may further provide interpolation techniques generally known in the art. The processor 68 is generally computer-based and examples may include a post-processor, a microprocessor and/or a digital signal processor.

A local calibrated temperature sensor (not shown) may also be part of the sub-metering system 54 that serves as a thermal reference.

The sensor data compression block 66 is known to one having skill in the art and is generally optional with regard to the present disclosure.

The communication module 70 is configured to send and receive information and commands relative to the operation of the remote unit 56. The communication module 70 may include a network coding engine block 84, an ADC 86, a receiver 88 (e.g. wireless), and a transmitter 90 (e.g., wireless). As is well-known in the art, the transmitter and receiver may be implemented as a transceiver or could be replaced by a well-known wired communication link (not shown). The network coding engine block 84 is configured to interface the input and output of the processor 68 to transmitter 90, receiver 88 (through ADC 86), provide encoding (e.g., for error detection and correction), security via encryption or authentication, and other features.

The ADC 86 is configured to convert analog received information to digital information for eventual use by the processor 68. The network coding engine 84 provides any decoding necessary for error detection and correction, and/or security.

The receiver 88 and the transmitter 90 are configured to respectively receive and transmit communications to and from other systems or components such as the computing device 36 of the building management system 20 and/or the HVAC system 22. Such communications may be conducted over pathways that may be wired or wireless.

The power management module 72 is configured to control the power acquisition and power consumption of the remote unit 56 by controlling both the power source 74 and power consuming components. Such power consuming components may include the processor 68, the optional data compression block 66, the memory 64, the FPA 62 and the communication module 70 (e.g., transmitter 90, receiver 88, and ADC 86). It is contemplated and understood that other energy consuming components of the remote unit 56 may be controlled. Such control may simultaneously maintain the remote unit 56 functionality while maximizing life (i.e., the length of time the remote unit 56 can remain functional). In one embodiment, this control is achieved by receding horizon control (optimization). In alternative embodiments other control strategies such as model predictive control may be used.

The power source 74 provides power to the remote unit 56 and may include at least one of a super capacitor 96, a battery 98 and a solar cell 100. The power management module 72 is configured to draw power from any one of the power sources as dictated by the needs of the system. The power management module 72 may also facilitate a power scheduling function that controls the simultaneous use of the various on-chip component functions to minimize unwanted current spikes. It is contemplated and understood that other short-term energy storage devices may be used in place of the super capacitor 100, other long-term energy storage devices may be used in place of the battery 98, and other energy harvesting or recharging devices may be used in place of the solar cell 100 including power from a power grid.

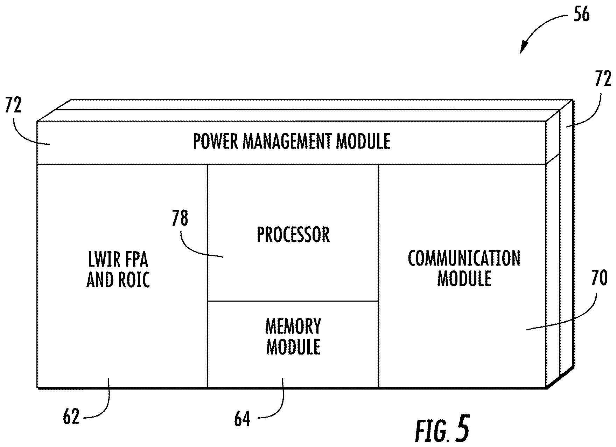

Referring to FIG. 5, the FPA 62 (including the ROIC), the memory module 64, the processor 68, the power management module 72 and the communication module 70 may generally be integrated together on a single substrate platform or chip 100 that may be silicon-based. More specifically, the components may generally share the focal plane of the FPA 62. Together, the integrated components may be aimed toward minimal power consumption, small overall size/weight and low cost. Integration of these components may be further enhanced via a power scheduling function conducted by the power management module 72 as well as coordinated design of the individual functions of each component to work harmoniously. That is, the power scheduling function may, for example, minimize unwanted current spikes by controlling the simultaneous use of the various on-chip components functions.

By placing individual subsystem components on the same die or chip, signal integrity, resistive losses and security is generally improved through elimination of interconnects and sources of extraneous electrical and radiative noise typically present in systems with similar functionality but that use several individually packaged integrated circuits (IC's). Moreover, by placing all components on the same substrate platform, economy of scale is achieved that enables chip-scale cost reduction. Yet further, power management and consumption may be optimized potentially achieving long life battery operation, and facilitating packaging of various circuitry components on a single chip. The detector unit 56 may be built upon a ferroelectric memory platform using either active or passive detection; and, may be built upon a thermal isolator rather than a MEMS bridge, thereby improving yield, reducing across device response variations, and may be compatible with wafer production having small feature sizes.

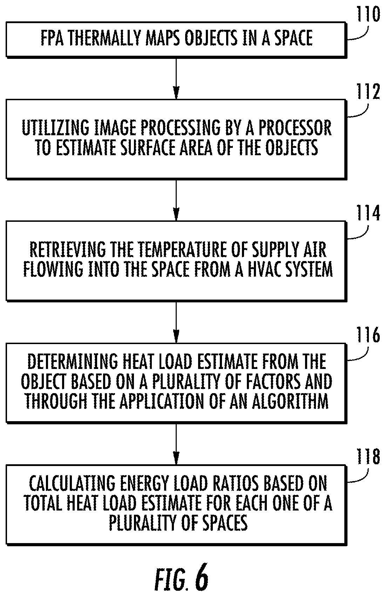

In operation, the FPA 62 thermally maps the more substantial caloric emitters in a space 36. Referring to FIG. 6, as block 110, the FPA 62 thermally maps the objects 60. As block 112, image processing by the processor 68 (and based upon the number of sensors 82 mapped onto the thermally profiled objects 60 in the space 36) may be used to estimate object surface area. As block 114, the temperature of air 52 flowing into a given space 36 is retrieved and/or estimated (e.g., retrieved from the computer readable storage medium 40 of the computing device 36). As block 116, the heat load from the various objects 60 in the space 36 is determined by a combination of the following factors:
- Radiative heat using the Stephan-Boltzmann Law for heat flux.
- Forced or natural convective heat transfer from the temperature of the emitter to the surrounding air related to the surface area of the object 60, difference in temperature between the object 60 and forced or naturally convective air, and the surface area.
- The rise in ambient temperature as determined from IR thermography of the various surfaces (e.g., walls, furniture, and others).
- Look-up tables for heat dissipation based upon image analytics that identify sources/objects (e.g., computers, servers, space heaters, lamps, kitchen appliances, and others).
The processor 68 may be configured to apply an algorithm to these factors. As block 118, the processor 68 and/or the processor 38 may, through algorithms that related image data to heat load such as calculated ratios and the known total energy expended, establish an energy usage proportion (i.e., energy load estimate) for each space 36.

Benefits of the present disclosure include a low cost means of estimating, for example, HVAC loading for energy sub-metering.

While the present disclosure is described with reference to exemplary embodiments, it will be understood by those skilled in the art that various changes may be made and equivalents may be substituted without departing from the scope of the claims. In addition, various modifications may be applied to adapt the teachings of the present disclosure to particular situations, applications, and/or materials, without departing from the scope of the claims. The present disclosure is thus not limited to the particular examples disclosed herein, but includes all embodiments falling within the scope of the appended claims.

## Claims

1. An energy usage sub-metering system (54) comprising:
a first focal plane array (62) including a plurality of radiant energy sensors (82) configured to thermally map objects in a first space (34);
a second focal plane array (62) including a plurality of radiant energy sensors (82) configured to thermally map objects in a second space (34); and
a computer-based processor (68) coupled to the first and second focal plane arrays (62) and configured to:
establish total energy expended associated with air conditioning of the first and second spaces (34);
estimate surface area of the objects in the first and second spaces (34);
determine (116) first and second heat load estimates associated with the respective first and second spaces (34) from the objects in the respective first and second spaces and based on a plurality of factors and through the application of an algorithm; and
proportion (118) energy usage between the first and second spaces (34) based on the first and second heat load estimates and the total energy expended.

2. The energy usage sub-metering system set forth in claim 1, wherein the plurality of radiant energy sensors comprise a plurality of infrared sensors.

3. A building management system comprising:
an ambient air temperature control system constructed and arranged to control air temperature in a plurality of predefined spaces; and
the energy usage sub-metering system (54) set forth in claim 1 or 2.

4. A method of operating an energy usage sub-metering system (54), the method comprising:
establishing total energy expended associated with air conditioning of a first and a second spaces (34);
thermally mapping (110) objects in the first space by a first infrared focal plane array (62);
thermally mapping (110) objects in the second space by a second infrared focal plane array (62);
utilizing image processing (112) by at least one computer-based processor (68) to estimate surface area of the objects in the first and second spaces;
determining (116) first and second heat load estimates associated with the respective first and second spaces from the objects in the respective first and second spaces and based on a plurality of factors and through the application of an algorithm by the computer-based processor (68); and
proportioning (118) energy usage between the first and second spaces (34) based on the first and second heat load estimates and the total energy expended.

5. The method set forth in claim 4, wherein the plurality of factors include first and second supply air temperatures for the respective first and second spaces (34).

6. The method set forth in claim 5, wherein the plurality of factors include calculating radiative heat using the Stephan-Boltzmann Law for heat flux.

7. The method set forth in claim 6, wherein the plurality of factors include convective heat transfer from the objects to surrounding air.

8. The method set forth in claim 7, wherein the plurality of factors include a rise in ambient temperature as determined from IR thermography of the surface areas.

9. The method set forth in claim 4, wherein the plurality of factors include look-up tables for heat dissipation based upon image analytics that identify the objects.

10. The method set forth in claim 4, wherein a HVAC system expends the total energy.

11. The method set forth in claim 10, wherein the objects include humans.

12. The method set forth in claim 11, wherein the objects include computers.

## Patentansprüche

1. Energieverbrauchs-Submeteringsystem (54), umfassend:
eine erste Brennebenenanordnung (62), welche eine Vielzahl von Strahlungsenergiesensoren (82) beinhaltet, welche dazu konfiguriert sind, Objekte in einem ersten Raum (34) thermisch abzubilden;
eine zweite Brennebenenanordnung (62), welche eine Vielzahl von Strahlungsenergiesensoren (82) beinhaltet, welche dazu konfiguriert sind, Objekte in einem zweiten Raum (34) thermisch abzubilden; und
einen computerbasierten Prozessor (68), welcher an die erste und zweite Brennebenenanordnung (62) gekoppelt ist und zu Folgendem konfiguriert ist:
Ermitteln einer gesamten aufgewendeten Energie, welche mit einer Klimatisierung des ersten und zweiten Raums (34) verbunden ist;
Schätzen eines Flächenbereichs der Objekte in dem ersten und zweiten Raum (34);
Bestimmen (116) einer ersten und zweiten Wärmelastschätzung, welche mit dem jeweiligen ersten und zweiten Raum (34) verbunden ist, von den Objekten in dem jeweiligen ersten und zweiten Raum und basierend auf einer Vielzahl von Faktoren und durch das Anwenden eines Algorithmus; und
Proportionieren (118) eines Energieverbrauchs zwischen dem ersten und zweiten Raum (34) basierend auf der ersten und zweiten Wärmelastschätzung und der gesamten aufgewendeten Energie.

2. Energieverbrauchs-Submeteringsystem nach Anspruch 1, wobei die Vielzahl von Strahlungsenergiesensoren eine Vielzahl von Infrarotsensoren umfasst.

3. Gebäudemanagementsystem, umfassend:
ein Umgebungslufttemperatursteuersystem, welches dazu konstruiert und angeordnet ist, eine Lufttemperatur in einer Vielzahl von vordefinierten Räumen zu steuern; und
das Energieverbrauchs-Submeteringsystem (54) nach Anspruch 1 oder 2.

4. Verfahren zum Betreiben eines Energieverbrauchs-Submeteringsystems (54), wobei das Verfahren Folgendes umfasst:
Ermitteln einer gesamten aufgewendeten Energie, welche mit einer Klimatisierung eines ersten und zweiten Raums (34) verbunden ist;
thermisches Abbilden (110) von Objekten in dem ersten Raum durch eine erste Infrarotbrennebenenanordnung (62);
thermisches Abbilden (110) von Objekten in dem zweiten Raum durch eine zweite Infrarotbrennebenenanordnung (62);
Verwenden von Bildverarbeitung (112) durch mindestens einen computerbasierten Prozessor (68), um einen Flächenbereich der Objekte in dem ersten und zweiten Raum zu schätzen;
Bestimmen (116) einer ersten und zweiten Wärmelastschätzung, welche mit dem jeweiligen ersten und zweiten Raum verbunden ist, von den Objekten in dem jeweiligen ersten und zweiten Raum und basierend auf einer Vielzahl von Faktoren und durch das Anwenden eines Algorithmus durch den computerbasierten Prozessor (68); und
Proportionieren (118) eines Energieverbrauchs zwischen dem ersten und zweiten Raum (34) basierend auf der ersten und zweiten Wärmelastschätzung und der gesamten aufgewendeten Energie.

5. Verfahren nach Anspruch 4, wobei die Vielzahl von Faktoren eine erste und zweite Luftzufuhr-Temperatur für den jeweiligen ersten und zweiten Raum (34) beinhalten.

6. Verfahren nach Anspruch 5, wobei die Vielzahl von Faktoren ein Berechnen von Strahlungswärme mithilfe des Stephan-Boltzmann-Gesetzes zum Wärmestrom beinhaltet.

7. Verfahren nach Anspruch 6, wobei die Vielzahl von Faktoren eine konvektive Wärmeübertragung von den Objekten an die Außenluft beinhaltet.

8. Verfahren nach Anspruch 7, wobei die Vielzahl von Faktoren einen Anstieg einer Umgebungstemperatur beinhaltet, wie von einer IR-Thermographie der Flächenbereiche bestimmt.

9. Verfahren nach Anspruch 4, wobei die Vielzahl von Faktoren Nachschlagetabellen zur Wärmeableitung basierend auf einer Bildanalyse beinhaltet, welche die Objekte identifiziert.

10. Verfahren nach Anspruch 4, wobei ein Klimatisierungs-(HVAC-)System die Gesamtenergie aufwendet.

11. Verfahren nach Anspruch 10, wobei die Objekte Menschen beinhalten.

12. Verfahren nach Anspruch 11, wobei die Objekte Computer beinhalten.

## Revendications

1. Système de sous-comptage de consommation d'énergie (54) comprenant :
un premier réseau de plan focal (62) comportant une pluralité de capteurs d'énergie rayonnante (82) configurés pour mapper thermiquement des objets dans un premier espace (34) ;
un second réseau de plan focal (62) comportant une pluralité de capteurs d'énergie rayonnante (82) configurés pour mapper thermiquement des objets dans un second espace (34) ; et
un processeur informatique (68) couplé aux premier et second réseaux de plan focal (62) et configuré pour :
établir l'énergie totale dépensée associée à la climatisation des premier et second espaces (34) ;
estimer la surface des objets dans les premier et second espaces (34) ;
déterminer (116) des première et seconde estimations de charge thermique associées aux premier et second espaces (34) respectifs à partir des objets dans les premier et second espaces respectifs et sur la base d'une pluralité de facteurs et par l'application d'un algorithme ; et
proportionner (118) la consommation d'énergie entre les premier et second espaces (34) sur la base des première et seconde estimations de charge thermique et de l'énergie totale dépensée.

2. Système de sous-comptage d'utilisation d'énergie selon la revendication 1, dans lequel la pluralité de capteurs d'énergie rayonnante comprennent une pluralité de capteurs infrarouges.

3. Système de gestion de bâtiment comprenant :
un système de commande de température de l'air ambiant construit et agencé pour commander la température de l'air dans une pluralité d'espaces prédéfinis ; et
le système de sous-comptage de consommation d'énergie (54) selon la revendication 1 ou 2.

4. Procédé d'exploitation d'un système de sous-comptage de consommation d'énergie (54), le procédé comprenant :
l'établissement de l'énergie totale dépensée associée à la climatisation d'un premier et d'un second espaces (34) ;
le mappage thermique (110) des objets dans le premier espace par un premier réseau de plan focal infrarouge (62) ;
le mappage thermique (110) des objets dans le second espace par un second réseau de plan focal infrarouge (62) ;
l'utilisation d'un traitement d'image (112) par au moins un processeur informatique (68) pour estimer la superficie des objets dans les premier et second espaces ;
la détermination (116) des première et seconde estimations de charge thermique associées aux premier et second espaces respectifs à partir des objets dans les premier et second espaces respectifs et sur la base d'une pluralité de facteurs et par l'application d'un algorithme par le processeur informatique (68) ; et
le fait de proportionner (118) la consommation d'énergie entre les premier et second espaces (34) sur la base des première et seconde estimations de charge thermique et de l'énergie totale dépensée.

5. Procédé selon la revendication 4, dans lequel la pluralité de facteurs comportent des première et seconde températures d'air d'alimentation pour les premier et second espaces respectifs (34).

6. Procédé selon la revendication 5, dans lequel la pluralité de facteurs comportent le calcul de la chaleur radiative en utilisant la loi de Stephan-Boltzmann pour le flux de chaleur.

7. Procédé selon la revendication 6, dans lequel la pluralité de facteurs comportent le transfert de chaleur par convection des objets vers l'air environnant.

8. Procédé selon la revendication 7, dans lequel la pluralité de facteurs comportent une augmentation de la température ambiante telle que déterminée à partir de la thermographie IR des zones de surface.

9. Procédé selon la revendication 4, dans lequel la pluralité de facteurs comportent des tables de consultation pour la dissipation thermique sur la base d'analyses d'images qui identifient les objets.

10. Procédé selon la revendication 4, dans lequel un système HVAC dépense l'énergie totale.

11. Procédé selon la revendication 10, dans lequel les objets incluent des humains.

12. Procédé selon la revendication 11, dans lequel les objets incluent des ordinateurs.
